# EUROPÄISCHE PATENTSCHRIFT

(11) **EP 0 655 615 B1**
(45) Veröffentlichungstag und Bekanntmachung des Hinweises auf die Patenterteilung: **26.02.1997**
(21) Anmeldenummer: 93119050.8
(22) Anmeldetag: 25.11.1993
(51) Int. Cl.: G01L 7/08

(54) **Verfahren zur Herstellung einer Baueinheit eines Membran-Druckmittlers**
Procedure for fabricating a pressure transmitting diaphragm
Procédé de fabrication d'une membrane d'un capteur de pression

(43) Veröffentlichungstag der Anmeldung: 31.05.1995
(73) Patentinhaber: WIKA ALEXANDER WIEGAND GmbH & CO., D-63911 Klingenberg (DE)
(72) Erfinder: Neubeck, Kurt, Dr. Dipl.-Phys., D-63891 Miltenberg (DE); Gareus, Achim, Dipl.-Ing. (FH), D-63937 Weckbach (DE); Heller, Heinz, D-74731 Walldürn (DE)
(74) Vertreter: Tiedtke, Harro, Dipl.-Ing.

(56) Entgegenhaltungen:
- GB-A- 489 793
- US-A- 2 913 008
- US-A- 3 079 953
- US-A- 4 046 010
- US-A- 4 368 575
- SOVIET PATENTS ABSTRACTS Week 8835, 12. Oktober 1988 Derwent Publications Ltd., London, GB; AN 88-248286 & SU-A-1 374 067
- PATENT ABSTRACTS OF JAPAN vol. 9, no. 224 (P-387)(1947) 10. September 1985 & JP-A-60 082 827
- PATENT ABSTRACTS OF JAPAN vol. 7, no. 150 (P-207)(1295) 30. Juni 1983 & JP-A-58 060 232 (HITACHI SEISAKUSHO K.K.) 9. April 1983

## Beschreibung

Die Erfindung bezieht sich auf ein Verfahren zur Herstellung einer Baueinheit eines Membran-Druckmittlers gemäß dem Oberbegriff von Patentanspruch 1.

Ein Membran-Druckmittler dient dazu, einen zu messenden Druck eines Meßstoffes auf ein Druckmeßgerät zu übertragen, wenn dieses aus bestimmten Gründen, beispielsweise weil der Meßstoff korrosiv oder hochviskos ist, nicht direkt mit dem Meßstoff in Berührung kommen soll. Ein bekannter Membran-Druckmittler weist einen Grundkörper mit einer flachen Ausnehmung auf, die von einer ringförmigen Fügefläche umgeben ist. An der ringförmigen Fügefläche ist eine flache, konzentrisch gewellte Membran mit ihrem ringförmigen Randbereich durch Löten dicht befestigt. Auf diese Weise begrenzen die Wände der Ausnehmung und die Membran einen Druckmittlerraum, der in Betrieb mit einer geeigneten Füllflüssigkeit gefüllt ist. Der Druckmittlerraum steht über eine Leitung derart mit dem Druckmeßgerät in Verbindung, daß mittels des Druckmeßgerätes der Druck der Füllflüssigkeit im Druckmittlerraum gemessen und gegebenenfalls angezeigt wird. Auf der vom Druckmittlerraum abgewandten Seite der Membran ist im Membran-Druckmittler ein Meßstoffraum ausgebildet, der mit dem Meßstoff gefüllt ist, jedoch vom Druckmittlerraum durch die Membran getrennt ist. Durch Auslenkung der Membran wird der Druck des Meßstoffs zur Füllflüssigkeit im Druckmittlerraum übertragen.

Damit der ausnutzbare Hub der Membran ausreichend groß ist, ist diese gewellt. Dies bedeutet, daß die Membran in einem Radialschnitt ein wellenförmiges Profil hat. Die Wellenkämme und Wellentäler sind dabei als konzentrische Ringe ausgebildet. Der Boden der Ausnehmung im Grundkörper ist komplementär zur Wellung der Membran gewellt, so daß auch der Boden zueinander konzentrische, ringförmige Wellenkämme und Wellentäler aufweist. Einem Wellenkamm der Membran liegt ein Wellental des Bodens gegenüber; einem Wellental der Membran liegt ein Wellenkamm des Bodens gegenüber. Auf diese Weise bildet der Boden der Ausnehmung ein sogenanntes Membranbett. Die Wellung des Bodens der Ausnehmung dient dazu, bei gegebenem Arbeitsvolumen der Membran, das heißt gegebenem von der Membran verdrängtem Füllflüssigkeitsvolumen, das Volumen des Druckmittlerraumes möglichst klein zu halten. Ein weiterer Zweck der Wellung des Bodens der Ausnehmung liegt darin, daß bei zu hohem Druck des Meßstoffes, der eine Zerstörung der Membran oder anderer Elemente zur Folge haben könnte, die Membran in flächige Anlage am Membranbett kommen kann und auf diese Weise abgestützt und an einer weiteren Auslenkung gehindert wird.

Ein Verfahren zur Herstellung der Baueinheit aus der Membran und dem Grundkörper gemäß dem Oberbegriff von Patentanspruch 1 ist aus dem Dokument PATENT ABSTRACTS OF JAPAN, Bd. 7, Nr. 150, (P-207)(1295), 30.06.83, & JP-A-58 060 232 (HITACHI SEISAKUSHO K.K.), 09.04.83, bekannt. Gemäß diesem bekannten Verfahren wird zunächst an dem metallischen Grundkörper die Ausnehmung einschließlich ihres gewellten Bodens beispielsweise durch spanabhebende Bearbeitung angeformt. Unabhängig davon wird aus einem zunächst ebenen, kreisförmigen Membran-Rohling, der auch als Ronde bezeichnet wird, die Wellung der Membran angeformt. Dies geschieht mittels eines Prägewerkzeugs, das eine Patrize und eine Matrize aufweist, wobei dieses Prägewerkzeug nach dem Membranbett des Grundkörpers unter Berücksichtigung erforderlicher Korrekturen für die Membranstärke und weiterer Materialparameter des Membran-Rohlings hergestellt worden ist. Das Verbinden der gewellten Membran mit dem Grundkörper geschieht in der Weise, daß auf die Fügefläche des Grundkörpers Lot in Form einer Lotpaste oder einer Lotfolie aufgebracht wird, daß die Membran mit ihrem Randbereich auf die Fügefläche aufgelegt wird und dann durch Erwärmen des Lotes der Randbereich und die Fügefläche miteinander verlötet werden. Dabei ist besonders darauf zu achten, daß die Wellungen von Membran und Grundkörper genau übereinander zu liegen kommen und daß möglichst nur der kreisringförmige Bereich, in dem sich das Lot befindet, erwärmt wird. Bei den in Frage kommenden Werkstoffen von Membran und Grundkörper ist der Ausdehnungs-Temperaturkoeffizient des Grundkörpers höher als der der Membran. Wenn sich der Grundkörper aufgrund der Wärmezufuhr zum Zweck des Lötens zu stark ausdehnt, so könnte dies nach dem Erkalten zu einer unerwünschten Verformung der geprägten Membran führen. Damit die Wellung der Membran und die Wellung des Membranbetts tatsächlich komplementär zueinander sind und einander in gewünschter Weise gegenüber liegen, ist somit ein erheblicher Aufwand bei der Herstellung des Werkzeugs zum Prägen der Membran sowie beim Löten erforderlich.

Der Erfindung liegt die Aufgabe zugrunde, das gattungsgemäße Verfahren derart zu führen, daß mit vergleichsweise geringem Fertigungsaufwand eine Baueinheit herstellbar ist, bei der die Wellungen von Membran und Membranbett mit hoher Genauigkeit einander korrekt zugeordnet sind.

Diese Aufgabe wird erfindungsgemäß durch das Verfahren gemäß Patentanspruch 1 gelöst. Bei dem erfindungsgemäßen Verfahren wird somit in der Weise vorgegangen,
a) daß der ebene Membran-Rohling unter Zwischenfügen des Lotes an die Fügefläche angelegt wird,
b) daß während der nachfolgenden Erwärmung zum Zwecke des Lötens der Randbereich in Richtung zur Fügefläche gedrückt wird,
c) daß danach der Grundkörper, das Lot und der Membran-Rohling auf eine Temperatur unterhalb des Lotschmelzpunktes abgekühlt werden, und
d) daß danach der an die Ausnehmung des Grundkörpers angrenzende Mittelbereich des Membran-Rohlings in die Ausnehmung hinein bis zur Anlage an den Wellentälern des Membranbetts geprägt wird.

Bei dem erfindungsgemäßen Vorgehen wird somit ein ebener Membran-Rohling mit dem Grundkörper verlötet, so daß das vorherige Prägen des Membran-Rohlings zur Membran, das gemäß dem Stand der Technik notwendig war, entfällt. Das Löten erfolgt in der Weise, daß der gesamte Grundkörper und das Lot auf eine Temperatur oberhalb des Lotschmelzpunktes erwärmt werden, während der Randbereich des ebenen Membran-Rohlings in Richtung zur Fügefläche gedrückt wird. Aufgrund der Wärmezufuhr dehnt sich der Grundkörper wegen seines vergleichsweise höheren Ausdehnungs-Temperaturkoeffizienten stärker aus als der Membran-Rohling. Eine Erwärmung des letzteren ist nicht notwendig, kann jedoch in Kauf genommen werden, weil sich der Membran-Rohling wegen seines vergleichsweise kleineren Ausdehnungs-Temperaturkoeffizienten weniger ausdehnt als der Grundkörper. Vorzugsweise wird sogar auch der Membran-Rohling erwärmt, damit in einfacher Weise die gesamte Anordnung aus Membran-Rohling, Grundkörper und Lot insgesamt erwärmt werden kann, ohne daß darauf geachtet zu werden braucht, die Wärmezufuhr auf einen bestimmten Bereich zu beschränken. Nach der Abkühlung bis unterhalb des Lotschmelzpunktes sind der Randbereich des Membran-Rohlings und die Fügefläche des Grundkörpers fest und dicht miteinander verbunden. Während der Abkühlung schrumpft der Grundkörper stärker als der Membran-Rohling, so daß nach dem Erkalten der Mittelbereich des Membran-Rohlings nicht mehr eben ist, sondern undefiniert in Richtung zum Membranbett und/oder weg vom Membranbett ausgebeult ist. Dies heißt mit anderen Worten, daß nach dem Erkalten im Mittelbereich des Membran-Rohlings ein Materialüberschuß zur Verfügung steht, der zum Ausformen der Wellung der Membran benutzt wird. Dieser Mittelbereich des Membran-Rohlings wird schließlich in die Ausnehmung hinein bis zur Anlage an den Wellentälern des Membranbetts bewegt. Dabei wird der Mittelbereich sowohl plastisch als auch elastisch verformt. Die plastische Verformung führt dazu, daß dem Mittelbereich die Wellung des Membranbetts aufgeprägt wird. Da hierbei das Membranbett die Matrize bildet und der Membran-Rohling mit dem Grundkörper bereits fest verbunden ist, sind auf diese Weise die Wellung der Membran und die Wellung des Membranbetts genau komplementär zueinander geformt und angeordnet. Wenn die Kraft, die den Mittelbereich des Membran-Rohlings bis zur Anlage an den Wellentälern des Membranbetts bewegt hat, aufgehoben wird, wird der Mittelbereich aufgrund der gleichzeitigen elastischen Verformung desselben vom Membranbett abgehoben, so daß schließlich der fertig gewellte Mittelbereich zwischen dem Randbereich der Membran aufgespannt ist.

Wie sich aus der vorstehenden Beschreibung des erfindungsgemäßen Verfahrens ergibt, ist bei diesem der Lötvorgang zwischen dem Randbereich und der Membran und dem Grundkörper vereinfacht. Ein Werkzeug aus Patrize und Matrize wird zur Formung der Membran nicht benötigt. Allenfalls ein lediglich aus einer Patrize bestehendes Werkzeug wird zur Durchführung des Schrittes d) benötigt.

Vorteilhafte Ausgestaltungen der Erfindung sind in den abhängigen Ansprüchen gekennzeichnet.

Ausführungsbeispiele der Erfindung werden im folgenden unter Bezugnahme auf die Zeichnung näher erläutert. Es zeigen:
Figur 1 eine schematische Seitenansicht, teilweise im Schnitt, eines Membran-Druckmittlers;
Figur 2 eine vergrößerte Einzelheit X in Figur 1;
Figuren 3, 4 und 5 schematische Anordnungen zur Erläuterung einzelner Schritte des Verfahrens; und Figur 6 eine schematische Anordnung zur Erläuterung eines weiteren Ausführungsbeispiels des Verfahrens.

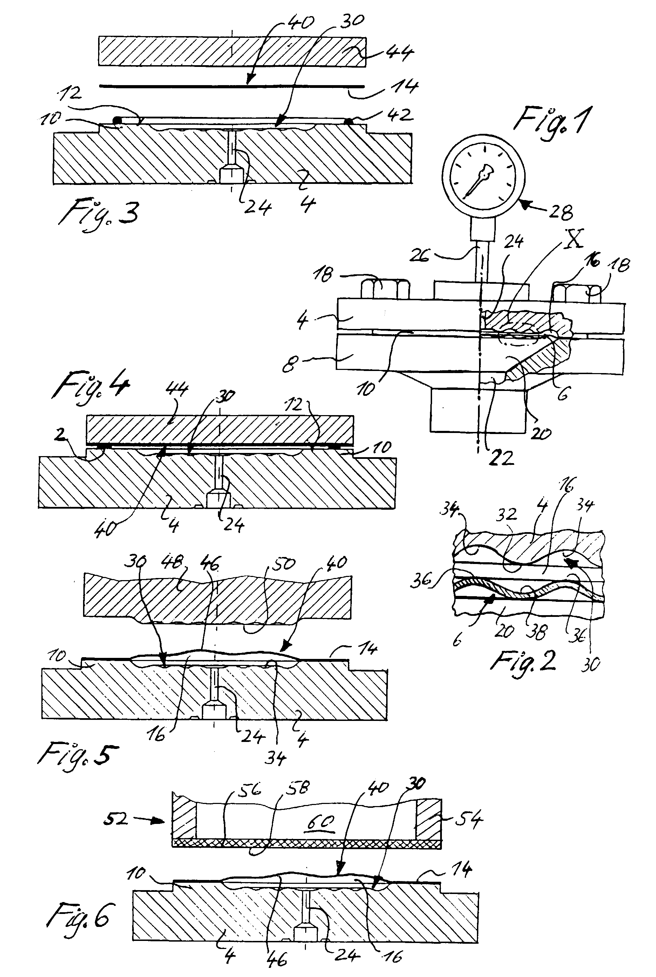

Ein schematisch in Figur 1 gezeigter Membran-Druckmittler umfaßt einen im wesentlichen kreisscheibenförmigen Grundkörper 4, eine flache, gewellte Membran 6 mit kreisförmigem Umriß sowie einen im wesentlichen kreisscheibenförmigen Flanschkörper 8.

Der Grundkörper 4 besteht aus einem metallischen Werkstoff, beispielsweise einem austenitischen Stahl. Auf seiner in Figur 1 unten liegenden Seite weist der Grundkörper 4 eine mittig angeordnete, flache Ausnehmung auf, die von einem erhöhtem, in Figur 1 nach unten vorstehenden Ringflanschabschnitt 10 umgeben ist, der eine kreisringförmige, ebene Fügefläche 12 aufweist. An der ringförmigen Fügefläche 12 ist ein ringförmiger Randbereich 14 (siehe Figur 5) der Membran 6 dicht angelötet. Auf diese Weise begrenzen die Wände der Ausnehmung sowie die Membran 6 einen flachen Druckmittlerraum 16.

Der Flanschkörper 8 besteht ebenfalls aus einem metallischen Werkstoff, beispielsweise einem gegenüber dem Meßstoff beständigen austenitischen Stahl, und ist mit Hilfe von Schrauben 18 derart fest mit dem Grundkörper 4 verbunden, das seine ebene Oberseite am ebenen Randbereich 14 der Membran 6 dichtend anliegt. Gegebenenfalls kann in diesem Bereich zusätzlich ein Dichtelement vorgesehen sein. Mittig im Flanschkörper 8 ist ein Meßstoffraum 20 ausgebildet, der vom Druckmittlerraum 16 durch die Membran 6 getrennt ist. Durch eine Bohrung 22 im Flanschkörper 8 ist der Meßstoffraum 20 an das System anschließbar, das den Meßstoff führt, dessen Druck gemessen werden soll.

Der Druckmittlerraum 16 ist durch eine mittige Bohrung 24 mit einer Leitung 26 verbunden, an die wiederum ein (verkleinert dargestelltes) Druckmeßgerät 28, beispielsweise ein Federrohrmanometer, angeschlossen ist.

Der Boden der flachen Ausnehmung im Grundkörper 4 bildet ein Membranbett 30. Wie insbesondere Figur 2 erkennen läßt, hat das Membranbett 30 eine gewellte Oberfläche. Dabei besteht die Wellung aus ringförmigen Wellenkämmen 32 und ringförmigen Wellentälern 34, die sämtlich zueinander konzentrisch angeordnet und ausgebildet sind. Die Membran 6 weist eine zur Wellung des Membranbetts 30 komplementäre Wellung auf. Diese besteht, wie insbesondere Figur 2 erkennen läßt, aus kreisringförmigen Wellenkämmen 36 und kreisringförmigen Wellentälern 38, die sämtlich zueinander konzentrisch angeordnet und ausgebildet sind. Dabei liegt ein Wellental 34 des Membranbetts 30 einem Wellenkamm 36 der Membran 6 gegenüber. Entsprechend liegt einem Wellenkamm 32 des Membranbetts 30 ein Wellental 38 der Membran 6 gegenüber. Die Membran 6 besteht üblicherweise aus einem an den Einsatzzweck des Membran-Druckmittlers 2 angepaßten Sondermaterial, beispielsweise Titan, Hastelloy (Nickel-Molybdän-Eisen-Legierung mit über 55% Nickel), Monel (Nickel-Kupfer-Legierung mit 30 bis 40% Kupfer), Inconel (warmfeste Nickelbasislegierung) oder Tantal.

Im Betrieb sind der Meßstoffraum 20, die Bohrung 24, die Leitung 26 und das Meßelement des Druckmeßgerätes 28 mit einer geeigneten Füllflüssigkeit gefüllt. Ferner ist im Betrieb der Meßstoffraum 20 mit dem Meßstoff gefüllt, dessen Druck gemessen werden soll. Der Druck des Meßstoffs im Meßstoffraum 20 wird mittels der Membran 6 zur Füllflüssigkeit im Druckmittlerraum 16 übertragen, so daß das Druckmeßgerät 28, das den Druck der Füllflüssigkeit mißt und anzeigt, dadurch zugleich den Druck des Meßstoffs im Meßstoffraum 20 mißt und anzeigt. Aufgrund der zueinander komplementären Wellungen von Membran 6 und Membranbett 30 ist das Volumen des Druckmittlerraumes 16 im Vergleich zum Arbeitsvolumen der Membran 6 klein. Dies ist erwünscht. Bevor durch einen zu hohen Druck im Meßstoffraum 20 Schäden an der Membran 6 oder anderen Elementen, beispielsweise dem Druckmeßgerät 28, auftreten können, kommt die Membran 6 im wesentlichen flächig zur Anlage am Membranbett 30.

Die Membran 6 und der Grundkörper 4 bilden zusammen eine Baueinheit für den vorstehend beschriebenen Membran-Druckmittler 2. Beispiele für das Verfahren zur Herstellung dieser Baueinheit werden im folgenden unter Bezugnahme auf die Figuren 3 bis 6 näher erläutert. In diesen Figuren ist jeweils unten der Grundkörper 4 im Schnitt dargestellt, wobei die Ausnehmung und das Membranbett 30 im Gegensatz zu den Figuren 1 und 2 oben angeordnet sind.

Zunächst wird der Grundkörper 4 auf herkömmliche Weise fertig bearbeitet, so daß er das gewellte Membranbett 30, den Ringflanschabschnitt 10 mit der Fügefläche 12 und die Bohrung 24 aufweist. Ferner wird aus dem Sondermaterial der Membran ein kreisförmiger, ebener Membran-Rohling 40 geschnitten, der keinerlei Wellung aufweist.

Zur Vorbereitung des Lötvorgangs wird auf die Fügefläche 12 Lot 42 aufgetragen. Dabei handelt es sich beispielsweise um eine Lotpaste oder eine Lötfolie. Dann wird der ebene Membran-Rohling 40 auf die mit dem Lot 42 versehene Fügefläche 12 aufgelegt. Schließlich wird auf den Membran-Rohling 40 ein Gewichtskörper 44 mit ebener Unterseite so aufgelegt, daß diese den Randbereich 14 in Richtung zur Fügefläche 12 drückt. In Figur 3 sind der Grundkörper 4, der Membran-Rohling 40 und der Gewichtskörper 44 noch voneinander getrennt übereinander angeordnet gezeigt. Figur 4 zeigt dieselben Elemente im zusammengefügten, daß heißt aufeinandergelegten Zustand.

Die Anordnung gemäß Figur 4 wird dann als ganzes in einen nicht dargestellten Ofen gegeben, in dem die Anordnung allmählich erwärmt wird. Die Erwärmung erfolgt bis zu einer Temperatur oberhalb des Lotschmelzpunktes des Lotes 42. Während des Erwärmens dehnen sich der Grundkörper 4 und der Membran-Rohling 40 aus, wobei jedoch die Ausdehnung des Grundkörpers 4 aufgrund seines vergleichsweise höheren Ausdehnungs-Temperaturkoeffizienten größer ist als die des Membran-Rohlings. Dies bedeutet, daß der Ringflanschabschnitt 10 radial nach außen wandert, das heißt einen größeren Innenradius und größeren Außenradius als im kalten Zustand erhält. Der Randbereich 14 des Membran-Rohlings 40 wandert dagegen weniger weit radial nach außen. Sobald das Lot 42 geschmolzen ist, verteilt es sich in dem Spalt zwischen dem Randbereich 14 des Membran-Rohlings 40 und dem Ringflanschabschnitt 10 des Grundkörpers 4. Zugleich wird der Randbereich 14 vom Gewichtskörper 44 in Richtung zum Ringflanschabschnitt 10 gedrückt.

Im Anschluß daran wird die gesamte im Ofen befindliche Anordnung auf eine Temperatur unterhalb des Lotschmelzpunktes abgekühlt, so daß das dann erstarrte Lot die Fügefläche 12 und den Randbereich 14 fest miteinander verbindet. Beim weiteren Abkühlen bildet sich die zuvor erfolgte temperaturbedingte Ausdehnung zurück, wobei entsprechenddem vergleichsweise größeren Temperatur-Ausdehnungskoeffizienten des Werkstoffs des Grundkörpers 4 der Ringflanschabschnitt 10 stärker schrumpft als der Randbereich 14 des Membran-Rohlings 40. Da zu diesem Zeitpunkt der Randbereich 14 bereits fest mit der Fügefläche 12 bzw. dem Ringflanschabschnitt 10 verbunden ist, muß der Randbereich 14 an der erkaltungsbedingten Schrumpfung des Ringflanschabschnitts 10 teilnehmen, so daß auf den vom Randbereich 14 umgebenen Mittelbereich 46 des Membran-Rohlings 40 radiale Druckkräfte wirken. Diesem weicht der Mittelbereich 46 aus, indem er undefiniert nach unten, also in Richtung zum Membranbett 30, oder/und nach oben ausbeult. Dementsprechend ergibt sich für die Baueinheit nach dem Erkalten die in Figur 5 unten gezeigte Gestalt mit dem undefiniert ausgebeulten Mittelbereich 46.

Nachdem die Baueinheit dem Ofen entnommen worden ist und erkaltet ist, wird sie relativ zu einem Werkzeug 48 so angeordnet, wie dies in Figur 5 gezeigt ist. Bei dem Werkzeug 48 handelt es sich um eine Patrize aus einem starren Werkstoff, die eine Werkzeug-Prägefläche 50 aufweist, die komplementär zur gewünschten Wellung der gewellten Membran 6 geformt ist. Dabei bedeutet "komplementär" in diesem Fall, daß die Werkzeug-Prägefläche 50 eine solche Oberflächegestalt hat, daß sie zusammen mit dem Membranbett 30 als Matrize dem dazwischengefügten Mittelbereich 46 des Membran-Rohlings 40 die gewünschte Wellenform gibt, wenn das Werkzeug 48 den Mittelbereich 46 in flächigen Kontakt mit dem Membranbett 30 drückt. Dies bedeutet, daß die Werkzeug-Prägefläche 50 nicht ein genaues Negativ des Membranbetts 30 darstellt, sondern von einem solchen genauen Negativ durch Berücksichtigung der Dicke des Membran-Rohlings und weiterer Materialparameter desselben abweicht.

Mittels des Werkzeugs 48 wird der Mittelbereich 46 des Membran-Rohlings 40 nach unten in Figur 5 gedrückt, bis die Unterseite (in Figur 5) des Mittelbereichs 46 am Membranbett 30 flächig anliegt, und zwar derart, daß auch in den Wellentälern 34 des Membranbetts 30 eine Berührung mit dem Mittelbereich 46 stattfindet. Für diese Auslenkung des Mittelbereichs 46 bis zum flächigen Kontakt mit dem Membranbett 30 steht aufgrund der Tatsache, daß der Mittelbereich 46 zuvor ausgebeult worden ist, genug Membranwerkstoff zur Verfügung. Durch das Andrücken des Mittelbereichs 46 mittels des Werkzeugs 48 gegen das Membranbett 30 wird der Mittelbereich 46 sowohl elastisch als auch plastisch verformt. Die plastische Verformung führt dazu, daß dem Mittelbereich 46 die gewünschte Wellung der Membran 6 aufgeprägt wird. Nach dem Hochziehen des Werkzeugs 48 führt die elastische Verformung des Mittelbereichs 46 dazu, daß dieser sich aus dem Kontakt mit dem Membranbett 30 löst und eine Lage einnimmt, in der der Mittelbereich 46 vom Randbereich 14 aufgespannt ist. Dabei bleibt jedoch wegen der erfolgten plastischen Verformung die gewünschte Wellung der Membran erhalten.

Aufgrund des beschriebenen Vorgehen bei der Herstellung der Baueinheit sind die Wellungen der Membran 6 und des Membranbetts 30 genau formgleich und konzentrisch relativ zueinander. Da zum Zeitpunkt des Auflegens des MembranRohlings 40 auf den Grundkörper (siehe Figur 4) der Membran-Rohling 40 noch keine Wellung aufweist, braucht bei diesem Auflegen nicht auf genaue Konzentrizität zwischen der Wellung der Membran und der Wellung des Grundkörpers geachtet zu werden. Statt eines aus Patrize und zusätzlicher Matrize bestehenden Werkzeugs wird beim Prägen der Wellung der Membran das lediglich aus einer Patrize bestehende Werkzeug 48 benötigt; die Matrize ist durch den Grundkörper 4 selber gebildet. Die Notwendigkeit, während des Lötens die Wärmezufuhr auf einen eng begrenzten Bereich zu beschränken, ist bei dem beschriebenen Vorgehen vermieden.

Abweichungen von Einzelheiten des vorstehend beschriebenen Verfahrens sind möglich. So braucht das Andrücken des Membran-Rohlings 40 gegen die Fügefläche 12 des Ringflanschabschnitts 10 nicht mittels eines Gewichtskörpers 44 zu erfolgen. Statt dessen kann beispielsweise eine Federandruckeinrichtung zur Anwendung kommen. Außerdem kann die Anordnung aus dem Grundkörper 4 und dem Membran-Rohling 40 gemäß Figur 4 auch auf dem Kopf stehend erwärmt werden, so daß dann der Grundkörper 4 oberhalb des Membran-Rohlings 40 angeordnet ist und der Grundkörper 4 aufgrund seines Gewichts selber für das Andrücken des Randbereichs 14 in Richtung zur Fügefläche 12 sorgt.

Abweichend vom vorstehend beschriebenen Ausführungsbeispiel kann das Werkzeug 48 mit einer Oberflächenschicht aus einem elastischen Werkstoff versehen sein, die geringfügige Unebenheiten ausgleichen kann.

Ferner kann abweichend vom vorstehend beschriebenen Ausführungsbeispiel das Werkzeug 48 zumindest in seinem der Baueinheit zugewandten Abschnitt aus einem gummielastischen Werkstoff bestehen, der mit einer ebenen WerkzeugPrägefläche versehen ist. Dabei würde sich dann diese ebene Werkzeug-Prägefläche während des Andrückens des Mittelbereichs 46 gegen das Membranbett 30 elastisch verformen und der Oberflächengestalt des Memranbetts 30 mit dem dazwischengefügten Mittelbereich 46 des Membran-Rohlings 40 anpassen. Auch mit einem solchen elastischen Werkzeug läßt sich die gewünschte plastische Verformung des Mittelbereichs 46 derart, daß er die gewünschte Wellung aufweist, erzielen.

Abweichend von dem vorstehend beschriebenen Werkzeug 48 und seinen Alternativen kann das Andrücken des Mittelbereichs 46 gegen das Membranbett 30 mittels eines hydraulischen Werkzeugs 52 erfolgen, wie dies in Figur 6 schematisch dargestellt ist. Dieses hydraulische Werkzeug 52 umfaßt ein zylindrisches, starres Gehäuse 54, an dessen Stirnseite eine flache Wand 56 aus einem elastischen Werkstoff befestigt ist, die auf ihrer dem Membran-Rohling 40 zugewandten Seite eine ebene Werkzeug-Prägefläche 58 aufweist. Die Wand 56 und das Gehäuse 54 begrenzen gemeinsam eine Kammer 60, die mit einer Hydraulikflüssigkeit gefüllt ist.

Nachem die Anordnung aus dem Grundkörper 4 und dem daran angelöteten Membran-Rohling 40 erkaltet ist, wird das Werkzeug 52 aus der in Figur 6 dargestellten Stellung nach unten bewegt und auf die Anordnung aufgesetzt, so daß die Wand 56 auf dem Randbereich 14 aufsitzt. Danach wird der Druck der Hydraulikflüssigkeit in der Kammer 60 wo weit erhöht, daß die elastische Wand 56 nach unten ausgelenkt wird und dabei den Mittelbereich 46 des Membran-Rohlings bis in flächige Anlage am Membranbett 30 drückt. Dies ist von einer plastischen und elastischen Verformung des Mittelbereichs 46 begleitet, so daß der Mittelbereich 46 die gewünschte Wellung annimmt, wie dies bei den vorstehend bereits erläuterten Ausführungsbeispielen beschrieben ist.

Abweichend von den vorstehend beschriebenen Ausführungsbeispielen kann der Mittelbereich 46 des Membran-Rohlings auch ohne Zuhilfenahme eines Werkzeugs in die Ausnehmung des Grundkörpers 4 hinein bis zur Anlage an den Wellentälern des Membranbetts 30 bewegt werden. Es kann zu diesem Zweck eine Druckdifferenz zwischen dem Gasdruck in der Ausnehmung und dem Gasdruck auf der vom Membranbett 30 abgewandten Seite des Mittelbereichs 46 erzeugt werden, wobei die Druckdifferenz derart ist, daß sie zu einer resultierenden Kraft auf den Mittelbereich 46 führt, die den Mittelbereich 46 in Richtung zum Membranbett 30 bewegt. Eine solche Druckdifferenz kann beispielsweise dadurch erzeugt werden, daß die Ausnehmung im Grundkörper 4 bzw. der Druckmittlerraum 16 durch die Bohrung 24 hindurch evakuiert wird, so daß der Umgebungsdruck den Mittelbereich 46 in Anlage am Membranbett 30 drückt. Alternativ hierzu kann auf der vom Membranbett 30 abgewandten Seite des Mittelbereichs 46 ein Überdruck erzeugt werden, während der Druckmittlerraum 16 unter Umgebungsdruck steht. Schließlich können gleichzeitig im Druckmittlerraum 16 ein Unterdruck und auf der anderen Seite des Mittelbereichs 46 ein Überdruck angelegt werden.

Bei der Erfindung handelt es sich um ein Verfahren zur Herstellung einer Baueinheit eines Membran-Druckmittlers, die eine flache, konzentrisch gewellte Membran sowie einen metallischen Grundkörper aufweist. Im Grundkörper ist eine flache Ausnehmung ausgebildet, deren Boden ein konzentrisch gewelltes Membranbett bildet. Zur Herstellung dieser Baueinheit wird ein ebener, noch ungewellter Membran-Rohling gegen eine die Ausnehmung umgebende Fügefläche gedrückt, wobei zwischen der Fügefläche und dem Membran-Rohling Lot angeordnet ist. Diese Anordnung wird auf eine Temperatur oberhalb des Lotschmelzpunktes erwärmt und danach wieder abgekühlt, so daß das dann erstarrte Lot die Fügefläche und einen Randbereich des Membran-Rohlings fest miteinander verbindet. Danach wird der dem Membranbett gegenüberliegenden Mittelbereich des Membran-Rohlings in die Ausnehmung hinein bis zur flächigen Anlage am Membranbett bewegt, wobei der Mittelbereich elastisch und plastisch verformt wird und aufgrund seiner plastischen Verformung dauerhaft eine zur Wellung des Membranbetts komplementäre Wellung annimmt.

## Patentansprüche

1. Verfahren zur Herstellung einer Baueinheit eines Membran-Druckmittlers, die eine flache, konzentrisch gewellte Membran (6) sowie einen Grundkörper (4) mit einer Fügefläche (12) aufweist, mit der die Membran (6) entlang ihres Randbereichs (14) verbunden ist, wobei der Grundkörper (4) auf seiner der Membran (6) zugewandten Seite eine flache Ausnehmung mit einem Boden aufweist, der eine komplementär zur Wellung der Membran gewellte Oberfläche hat und ein Membranbett (30) für die Membran (6) bildet, wobei der metallische Grundkörper (4) einen höheren Ausdehnungs-Temperaturkoeffizienten als die metallische Membran (6) hat und wobei das Verfahren die Schritte umfaßt, daß am Grundkörper (4) das gewellte Membranbett (30) angeformt wird, daß an einem zunächst ebenen Membran-Rohling (40) die Wellung angeformt wird und daß die Verbindung zwischen der Fügefläche (12) des Grundkörpers (4) und dem Randbereich (14) der Membran (6) durch Löten mittels eines Lotes hergestellt wird, wobei während des Lötens der Grundkörper (4) und das Lot (42) auf eine Temperatur oberhalb des Lotschmelzpunktes erwärmt werden und nach der Erstarrung des Lotes dieses die Fügefläche (12) und den Randbereich (14) fest miteinander verbindet,
**gekennzeichnet durch** die Schritte
a) daß der ebene Membran-Rohling (40) unter Zwischenfügen des Lotes (42) an die Fügefläche (12) angelegt wird,
b) daß während der nachfolgenden Erwärmung zum Zweck des Lötens der Randbereich (14) in Richtung zur Fügefläche (12) gedrückt wird,
c) daß danach der Grundkörper (4), das Lot (42) und der Membran-Rohling (40) auf eine Temperatur unterhalb des Lotschmelzpunktes abgekühlt werden, und
d) daß danach der an die Ausnehmung des Grundkörpers (4) angrenzende Mittelbereich (46) des Membran-Rohlings (40) in die Ausnehmung hinein bis zur Anlage an den Wellentälern (34) des Membranbetts (30) geprägt wird.

2. Verfahren nach Anspruch 1, dadurch gekennzeichnet, daß im Schritt d) der Mittelbereich (46) des Membran-Rohlings (40) mittels eines Werkzeugs (48; 52) gegen das Membranbett (30) angedrückt wird.

3. Verfahren nach Anspruch 2, dadurch gekennzeichnet, daß das Werkzeug aus einem gummielastischen Werkstoff besteht und eine ebene Werkzeug-Prägefläche aufweist.

4. Verfahren nach Anspruch 2, dadurch gekennzeichnet, daß das Werkzeug (48) aus einem starren Werkstoff besteht und eine Werkzeug-Prägefläche (50) aufweist, die komplementär zur Wellung der gewellten Membran (6) geformt ist.

5. Verfahren nach Anspruch 4, dadurch gekennzeichnet, daß die Werkzeug-Prägefläche mit einer Oberflächenschicht aus einem elastischen Werkstoff versehen ist.

6. Verfahren nach Anspruch 2, dadurch gekennzeichnet, daß das Werkzeug ein hydraulisches Werkzeug (52) ist, das eine Wand (56) aus einem elastischen Werkstoff aufweist, die auf ihrer einen Seite eine ebene Werkzeug-Prägefläche (58) hat und auf deren anderer Seite eine mit Hydraulikflüssigkeit gefüllte Kammer (60) ausgebildet ist, wobei im Schritt d) der Druck der Hydraulikflüssigkeit auf einen so hohen Wert gebracht wird, daß die elastische Wand (56) den Mittelbereich (46) des Membran-Rohlings (40) gegen das Membranbett (30) andrückt.

7. Verfahren nach Anspruch 1, dadurch gekennzeichnet, daß im Schritt d) der Mittelbereich (46) des Membran-Rohlings (40) aufgrund einer Druckdifferenz zwischen einem Gasdruck in der Ausnehmung und einem Gasdruck auf der von der Ausnehmung abgewandten Seite des Membran-Rohlings (40) gegen das Membranbett (30) angedrückt wird.

8. Verfahren nach Anspruch 7, dadurch gekennzeichnet, daß im Schritt d) die Ausnehmung evakuiert wird.

9. Verfahren nach einem der Ansprüche 1 bis 8, dadurch gekennzeichnet, daß im Schritt b) der Randbereich (14) in Richtung zur Fügefläche (12) mittels eines auf den Membran-Rohling (40) aufgelegten Gewichtskörpers (44) angedrückt wird.

10. Verfahren nach einem der Ansprüche 1 bis 9, dadurch gekennzeichnet, daß der Schritt b) in einem Ofen durchgeführt wird.

11. Verfahren nach einem der Ansprüche 1 bis 10, dadurch gekennzeichnet, daß der Grundkörper (4) aus einem austenitischen Stahl besteht.

12. Verfahren nach einem der Ansprüche 1 bis 11, dadurch gekennzeichnet, daß der Werkstoff der Membran (6) Titan, Hastelloy, Monel, Nickel, Inconel oder Tantal ist.

## Claims

1. Method for manufacturing a component of a membrane pressure transmitter which has a shallow, concentrically corrugated membrane (6) and also a main body (4) having a joint area (12) to which the membrane (6) is joined along its peripheral region (14), the main body (4) having, on its side facing the membrane (6), a shallow recess having a bottom which has a surface which is corrugated in a manner complementary to the corrugation of the membrane and forms a membrane bed (30) for the membrane (6), the metallic main body (4) having a higher thermal coefficient of expansion than the metallic membrane (6) and the method comprising the steps that the corrugated membrane bed (30) is formed on the main body (4), that the corrugation is formed on an initially flat membrane blank (40) and that the joint between the joint area (12) of the main body (4) and the peripheral region (14) of the membrane (6) is made by soldering by means of a solder, the main body (4) and the solder (42) being heated to a temperature above the solder melting point during the soldering and the solder joining the joint area (12) and the peripheral region (14) firmly together after it solidifies, characterized by the steps
a) that the flat membrane blank (40) is applied to the joint area (12) with the solder (42) inbetween,
b) that during the subsequent heating, the peripheral region (14) is pressed in the direction of the joint area (12) for the purpose of soldering the peripheral region (14),
c) that the main body (4), the solder (42) and the membrane blank (40) are then cooled to a temperature below the solder melting point, and
d) that that central region (46) of the membrane blank (40) which adjoins the recess in the main body (4) is then impressed into the recess until it rests against the corrugation valleys (34) of the membrane bed (30).

2. Method according to Claim 1, characterized in that the central region (46) of the membrane blank (40) is pressed in step d) by means of a tool (48; 52) against the membrane bed (30).

3. Method according to Claim 2, characterized in that the tool is composed of a rubber-elastic material and has a flat tool stamping face.

4. Method according to Claim 2, characterized in that the tool (48) is composed of a rigid material and has a tool stamping face (50) which is formed in a complementary fashion to the corrugation of the corrugated membrane (6) .

5. Method according to Claim 4, characterized in that the tool stamping face is provided with a surface layer composed of an elastic material.

6. Method according to Claim 2, characterized in that the tool is a hydraulic tool (52) which has a wall (56) composed of an elastic material which has, on its one side, a flat tool stamping face (58) and, on its other side, a chamber (60) filled with hydraulic fluid is formed, the pressure of the hydraulic fluid being brought to a high enough value in step d) for the elastic wall (56) to press the central region (46) of the membrane blank (40) against the membrane bed (30).

7. Method according to Claim 1, characterized in that the central region (46) of the membrane blank (40) is pressed in step d) against the membrane bed (30) as a result of a pressure difference between a gas pressure in the recess and a gas pressure on that side of the membrane blank (40) which is remote from the recess.

8. Method according to Claim 7, characterized in that the recess is evacuated in step d).

9. Method according to one of Claims 1 to 8, characterized in that the peripheral region (14) is pressed in step b) in the direction of the joint area (12) by means of a weight body (44) applied to the membrane blank (40).

10. Method according to one of Claims 1 to 9, characterized in that step b) is carried out in a furnace.

11. Method according to one of Claims 1 to 10, characterized in that the main body (4) is composed of an austenitic steel.

12. Method according to one of Claims 1 to 11, characterized in that the material of the membrane (6) is titanium, Hastelloy, Monel, nickel, Inconel or tantalum.

## Revendications

1. Procédé de fabrication d'un composant de capteur de pression à membrane, présentant une membrane (6) plane, dotée d'une ondulation concentrique, ainsi qu'un corps de base (4) ayant une surface de joint (12), à laquelle la membrane (6) est reliée, le long de sa zone de bordure (14), le corps de base (4) présentant sur sa face tournée vers la membrane (6) un évidement plat ayant un fond doté d'une surface ayant une ondulation complémentaire de l'ondulation de la membrane, et un plan à membrane (30) destiné à la membrane (6), le corps de base (4) métallique ayant un coefficient de dilatation thermique supérieur à celui de la membrane métallique (6), et le procédé comprenant les étapes consistant à : former le plan à membrane (30) ondulé d'une seule pièce sur le corps de base (4), former l'ondulation dans la matière sur une ébauche de membrane (40) qui est d'abord plane et établir la liaison entre la surface de joint (12) du corps de base (4) et la zone de bordure (14) de la membrane (6), par brasage au moyen d'une brasure, en procédant, pendant le brasage du corps de base (4) et de la brasure (42), à un chauffage à une température supérieure au point de fusion de la brasure et après la solidification de la brasure, celle-ci relie rigidement la surface de joint (12) et la zone de bordure (14),
caractérisé par les étapes consistant à :
a) appliquer l'ébauche de membrane (40) plane sur la surface de joint (12), avec interposition de la brasure (42),
b) presser la zone de bordure (14) en direction de la surface de joint (12), pendant le chauffage subséquent effectué aux fins du brasage,
c) refroidir ensuite le corps de base (4), la brasure (42) et l'ébauche de membrane (40) à une température inférieure au point de fusion de la brasure, et
d) former tridimensionnellement ensuite la zone médiane (46), limitrophe à l'évidement du corps de base (4), de l'ébauche de membrane (40), en pénétrant dans l'évidement, jusqu'à venir en appui sur les creux d'ondulation (34) du plan à membrane (30).

2. Procédé selon la revendication 1, caractérisé en ce que, à l'étape d), la zone centrale (46) de l'ébauche de membrane (40) est pressée contre le plan à membrane (30), au moyen d'un outil (48; 52).

3. Procédé selon la revendication 2, caractérisé en ce que l'outil est constitué d'un matériau ayant l'élasticité du caoutchouc et présentant une surface d'emboutissage d'outil qui est plane.

4. Procédé selon la revendication 2, caractérisé en ce que l'outil est constitué d'un matériau rigide et présente une surface d'emboutissage d'outil (50) ayant une forme complémentaire de celle de l'ondulation de la membrane (6) ondulée.

5. Procédé selon la revendication 4, caractérisé en ce que la surface d'emboutissage d'outil est reliée à une couche de surface réalisée en un matériau élastique.

6. Procédé selon la revendication 2, caractérisé en ce que l'outil est un outil hydraulique (22), présentant une paroi (56) réalisée en un matériau élastique, ayant sur une de ses faces une surface d'emboutissage d'outil (58) plane et sur son autre face une chambre (60) remplie d'un liquide hydraulique, la pression du liquide hydraulique étant amenée, l'étape d), à une valeur si *élevée* que la paroi élastique (56) de la zone centrale (46) presse l'ébauche de membrane (40) contre la plan à membrane (30).

7. Procédé selon la revendication 1, caractérisé en ce que, à l'étape d), la zone centrale (46) de l'ébauche de membrane (40) est pressée contre le plan à membrane (30), du fait de la différence entre une pression de gaz régnant dans l'évidement et une pression de gaz régnant sur la face, opposée à l'évidement, de l'ébauche de membrane (40).

8. Procédé selon la revendication 7, caractérisé en ce que l'évidement est placé sous vide à l'étape d).

9. Procédé selon l'une des revendications 1 à 8, caractérisé en ce que, à l'étape b), la zone de bordure (14) est pressée dans la direction de la surface de joint (12), au moyen d'un corps lourd (44), posé sur l'ébauche de membrane (40).

10. Procédé selon l'une des revendications 1 à 9, caractérisé en ce que l'étape b) est conduite dans un four.

11. Procédé selon l'une des revendications 1 à 10, caractérisé en ce que le corps de base (4) est constitué d'un acier austénitique.

12. Procédé selon l'une des revendications 1 à 11, caractérisé en ce que le matériau de la membrane (6) est du titane, de l'hastelloy, du monel, du nickel, de l'inconel ou du tantale.
